# EUROPÄISCHE PATENTSCHRIFT

(11) **EP 2 836 659 B1**
(45) Veröffentlichungstag und Bekanntmachung des Hinweises auf die Patenterteilung: **20.07.2016**
(21) Anmeldenummer: 13712189.3
(22) Anmeldetag: 19.03.2013
(51) Int. Cl.: F16L 3/127, E04G 21/04

(54) **HERSTELLUNGSVERFAHREN FÜR EINEN MASTARM UND BETONVERTEILERMAST**
PRODUCTION METHOD FOR A MAST ARM AND CONCRETE-DISTRIBUTING MAST
PROCÉDÉ DE FABRICATION D'UN BRAS DE MÂT ET MÂT DISTRIBUTEUR DE BÉTON

(30) Priorität: 13.04.2012 DE 102012206093; 07.05.2012 DE 102012207568
(43) Veröffentlichungstag der Anmeldung: 18.02.2015
(73) Patentinhaber: Putzmeister Engineering GmbH, 72631 Aichtal (DE)
(72) Erfinder: HASEL, Peter, 70199 Stuttgart (DE); BAß, Eric, 63594 Hasselroth-Neuenhaßlau (DE); RIEBENSTAHL, Roman, 63571 Gelnhausen (DE); RUPPEL, Jochen, 63628 Bad Soden-Salmünster Kerbersdorf (DE); WESTERMANN, Karl, 72141 Walddorfhäslach (DE)
(74) Vertreter: Gauss, Nikolai
(86) Internationale Anmeldenummer: PCT/EP2013/055744
(87) Internationale Veröffentlichungsnummer: WO 2013/152932

(56) Entgegenhaltungen:
- DE-A1- 19 644 410

## Beschreibung

Die Erfindung betrifft ein Verfahren zum Herstellen eines Mastarms mit einem Mastarmkörper und mit wenigstens einem Rohrhalter für einen Betonverteilermast sowie einen Betonverteilermast für stationäre und mobile Betonpumpen mit mehreren an Knickgelenken um eine Gelenkachse schwenkbar miteinander verbundenen Mastarmen, die eine Betonförderleitung halten, die wenigstens ein Drehgelenk hat und die ein mit einer Gelenkachse eines Knickgelenks fluchtende Drehachse aufweist, wobei der wenigstens eine Rohrhalter einen Rohrträgerabschnitt für das Aufnehmen der Betonförderleitung an einer Haltestelle hat, deren Ort durch die Lage der Gelenkachse vorgegeben ist.

Ein Betonverteilermast der eingangs genannten Art ist aus der DE 196 44 410 A1 bekannt. Der dort beschriebene Betonverteilermast enthält eine Betonförderleitung und hat drei Mastarme, die über Knickgelenke verbunden sind und die mit einem Hydraulikgetriebe verstellt werden können. Die Betonförderleitung in dem Betonverteilermast ist aus einer Vielzahl von Rohrsegmenten zusammengesetzt, die mit Rohrhaltern an den Mastarmen gehalten werden.

Betonverteilermaste haben häufig nicht nur drei, sondern vier, fünf oder noch mehr Mastarme. Die Länge der einzelnen Mastarme liegt meist zwischen 6m und 8m. Damit ein Betonverteilermast auf bis zu 60m oder mehr Gesamtlänge ausgefaltet werden kann, müssen die Mastarme in einem Betonverteilermast sehr hohen Stabilitätsanforderungen genügen. Die geforderte Stabilität lässt sich mit Mastarmkörpern erreichen, die aus Schweißkonstruktionen mit einem aus vier Stahlblechen zusammengefügten Kastenprofil bestehen. Die großen Abmessungen der Stahlbleche und der Wärmeeintrag beim thermischen Fügen haben zur Folge, dass diese Mastarmkörper sehr große Fertigungstoleranzen haben. Diese Fertigungstoleranzen sind erheblich größer als die Genauigkeitsanforderungen für die Anordnung der Gelenke und für die Position der Hydraulikgetriebe für das Bewegen der Mastarme in einem Betonverteilermast.

Bei der Herstellung von Betonverteilermasten müssen deshalb die Schweißkonstruktionen der Mastarmkörper einer aufwändigen mechanischen Nachbearbeitung unterzogen werden. Eine solche mechanische Nachbearbeitung birgt die Gefahr, dass in bestimmten Abschnitten eines Mastarmkörpers das Material geschwächt wird. Um die geforderte Stabilität nicht zu beeinträchtigen, wird bei den Schweißkonstruktionen von Mastarmkörpern das mechanische Nachbearbeiten auf ein Minimum reduziert.

Damit die Mastarmkörper in einem Betonverteilermast nicht unnötigen Belastungen ausgesetzt werden, ist es wichtig, dass die Drehachsen der Drehgelenke der Förderleitung und die Gelenkachsen der Knickgelenke in dem Betonverteilermast sehr genau übereinstimmen. Dies macht einen Ausgleich von Fertigungstoleranzen erforderlich.

Um Fertigungstoleranzen auszugleichen, werden die Rohrhalter für das Aufnehmen der Betonförderleitung herkömmlich an die Mastarmkörper in einem Betonverteilermast individuell angepasst und dann angeschweißt. Die Schweißverbindungen werden hier händisch erstellt, indem die Betonförderleitung an einem Mastarmkörper zunächst vormontiert und ein meist aus mehreren Teilen bestehender Rohrhalter anschließend grob fixiert, ausgerichtet und verschweißt wird. Diese Arbeitsschritte lassen sich nicht mit vertretbarem Aufwand automatisieren und müssen deshalb manuell durchgeführt werden. Die Arbeitsschritte erfordern auch, dass eine Montageperson Schweißverbindungen in Zwangslagen herstellen muss, was das Einhalten einer geforderten Schweißnahtgüte sehr aufwändig und schwierig macht. Aufgrund der notwendigen individuellen Anpassungen der Rohrhalter ist deshalb nicht nur das Montieren, sondern auch das Austauschen von Rohrhaltern an einem Mastarm im Rahmen von Wartungsarbeiten sehr aufwändig und teuer.

Aufgabe der Erfindung ist es deshalb, ein Verfahren anzugeben, mit dem der Fertigungsaufwand für einen Betonverteilermast reduziert werden kann, und einen Betonverteilermast zu schaffen, bei dem mit geringem Aufwand Rohrhalter montiert und ausgetauscht werden können.

Diese Aufgabe wird durch ein Verfahren der eingangs genannten Art gelöst, bei dem der Mastarmkörper mit einer Aufnahmeschnittstelle und der wenigstens eine Rohrhalter mit einem Befestigungsabschnitt vorgefertigt wird. Der Befestigungsabschnitt weist eine Anschlussschnittstelle auf. Die Aufnahmeschnittstelle wird mit wenigstens drei eine Ebene definierenden von Fertigungstoleranzen des Mastarmkörpers unabhängigen durch die Position der Gelenkachse derart vorgegebenen Lagebezugspunkten hergestellt und die Anschlussschnittstelle mit wenigstens drei eine Ebene definierenden und die Position des Rohrträgerabschnitts derart vorgebenden Lagebezugspunkten ausgebildet, dass die Betonförderleitung durch Anschließen des Rohrhalters mit seiner Anschlussschnittstelle an die Aufnahmeschnittstelle des Mastarmkörpers mit dem Rohrträgerabschnitt derart aufgenommen werden kann, dass sich die Haltestelle an dem durch die Lage der Gelenkachse vorgegebenen Ort befindet.

Ein erfindungsgemäßer Betonverteilermast hat wenigstens einen Mastarm mit einer Aufnahmeschnittstelle und enthält wenigstens einen vorgefertigten Rohrhalter mit einem Befestigungsabschnitt, der eine Anschlussschnittstelle aufweist, die an die Aufnahmeschnittstelle vorzugsweise lösbar angeschlossen ist. Die Aufnahmeschnittstelle weist dabei wenigstens drei eine Ebene definierende von Fertigungstoleranzen des wenigstens einen Mastarms unabhängige durch die Position der Gelenkachsen der beiden zueinander benachbart angeordneten Knickgelenke vorgegebene Lagebezugspunkte auf. Die Anschlussschnittstelle hat wenigstens drei eine Ebene definierende und die Position der Haltestelle vorgebende Lagebezugspunkte, deren Ort durch das Anschließen der Aufnahmeschnittstelle an die Anschlussschnittstelle festgelegt ist.

Die erfindungsgemäße Lösung geht von dem Gedanken aus, dass die Betonförderleitung in einem Betonverteilermast zwischen zwei Drehgelenken als ein Polygonzug idealisiert werden kann, der aus Linienzügen besteht, die durch Knotenpunkte miteinander verbunden sind. Die Linienzüge entsprechen dabei den Förderrohren. Die Knotenpunkte haben die Funktion von Haltestellen für die Rohrsegmente.

Eine Betonförderleitung in einem Betonverteilermast hat Drehachsen, die mit den Gelenkachsen der Knickgelenke des Betonverteilermastes zusammenfallen. Der Erfindung liegt dabei die Erkenntnis zugrunde, dass, wenn eine Betonförderleitung an den zwischen zwei Drehachsen liegenden Haltestellen im Wesentlichen geradlinig verläuft, übermäßige Belastungen der Rohrhalter, ein erhöhter Verschleiß der Förderrohre oder ungewollte Mastbewegungen im Pumpbetrieb vermieden werden können.

Erfindungsgemäß wird hierzu vorgeschlagen, die Rohrhalter mit einem Rohrträgerabschnitt für das Aufnehmen der Betonförderleitung an einer Haltestelle und mit einer Anschlussschnittstelle für das Verbinden mit den Körpern der Mastarme auszubilden, wobei an den Mastarmkörpern eine Aufnahme-Schnittstelle für die Rohrhalter vorgesehen wird. Die Aufnahmeschnittstelle der Mastarmkörper ist dabei mit Lagebezugspunkten ausgeführt, deren Position unabhängig von den Fertigungstoleranzen für den Mastarmkörper allein durch die Lage der Gelenkachsen der Knickgelenke an den Mastarmen bzw. den Drehachsen der Drehgelenke der Betonförderleitung vorgegeben ist. Die Anschlussschnittstelle der Rohrhalter hat Lagebezugspunkte, die sich auf eine Haltestelle einer Betonförderleitung in dem Rohrträgerabschnitt des Rohrhalters beziehen. Diese Lagebezugspunkte sind so gewählt, dass die Betonförderleitung in dem Betonverteilermast durch Anschließen des Rohrhalters an den Mastarmkörper mit dem Rohrträgerabschnitt an einer Haltestelle aufgenommen werden kann, deren Ort allein durch die Lage einer bestimmten Gelenkachse des Mastarms bzw. einer bestimmten Drehachse der Betonförderleitung vorgegeben und von den Fertigungstoleranzen eines Mastarmkörpers unabhängig ist.

Hierdurch wird erreicht, dass Rohrhalter und Mastarmkörper voneinander unabhängig hergestellt werden können und es dann ohne eine aufwändige Nachbearbeitung möglich ist, die Baugruppen so zusammenzufügen, dass die Haltestellen für die Rohrsegmente den Knotenpunkten eines Polygonzugs entsprechen, der einen idealen Verlauf für die Betonförderleitung angibt, wobei die Gelenkachsen der Drehgelenke der Betonförderleitung in den Drehachsen der Knickgelenke der Mastarme positioniert sind.

Von Vorteil ist es, wenn der Mastarmkörper wenigstens teilweise als ein Hohlprofilkörper ausgeführt wird, der einen Abschnitt mit einer um eine Materialreserve verstärkten Wandung hat und die Aufnahmeschnittstelle in der verstärkten Wandung des Mastarmkörpers ausgebildet wird. Diese Maßnahme ermöglicht das Ausgleichen der Fertigungstoleranzen einer Schweißkonstruktion, ohne dass die Festigkeit des Betonverteilermasts beeinträchtigt wird.

Indem die Anschlussschnittstelle an dem Mastarmkörper an einem Anschlussabschnitt eines vorzugsweise plattenförmig gestalteten Adapterstücks ausgebildet wird, lassen sich ebenfalls die Fertigungstoleranzen einer Schweißkonstruktion ausgleichen, ohne dass die Festigkeit des Betonverteilermasts dabei verringert wird. Für das Ausgleichen von Fertigungstoleranzen hat das Adapterstück eine Materialreserve. Das Anschlussstück kann z.B. plattenförmig gestaltet sein und eine Erhöhung aufweisen, die als Anschlussabschnitt dient. Auch der Befestigungsabschnitt des Rohrhalters wird günstigerweise als ein plattenförmig gestaltetes Anschlussstück ausgebildet, das eine Materialreserve hat.

Der Mastarmkörper kann mit mehreren Aufnahmeschnittstellen für das Anschließen eines Rohrhalters hergestellt werden, die jeweils wenigstens drei eine Ebene definierende von Fertigungstoleranzen des Mastarmkörpers unabhängige und durch die Position der Gelenkachse eines Knickgelenks vorgegebene Lagebezugspunkte aufweisen.

Eine Aufnahmeschnittstelle an einem Mastarmkörper wird vorteilhafterweise in einer vorzugsweise als Bearbeitungszentrum ausgebildeten Einrichtung für das Bearbeiten von Werkstücken mit einer auf die Position der Gelenkachsen bezogenen Bemaßung hergestellt. Auch die Anschlussschnittstelle eines Rohrhalters wird günstigerweise in einer vorzugsweise als Bearbeitungszentrum ausgebildeten Einrichtung für das Bearbeiten von Werkstücken mit einer auf die Position der mit dem Rohrhalter aufgenommenen Betonförderleitung bezogenen Bemaßung hergestellt.

Ein Rohrhalter kann an dem Mastarmkörper mit einem lösbaren Befestigungsmittel, insbesondere mit Schrauben befestigt werden. Diese Maßnahme ermöglicht, dass schadhafte Rohrhalter im Rahmen von Wartungsarbeiten mit geringem Aufwand ausgetauscht und durch passgenaue neue Rohrhalter ersetzt werden können. Rohrhalter an einem Mastarm können allerdings grundsätzlich auch mit Bolzen oder mit Nieten oder mittels Kleben befestigt werden. Das erfindungsgemäße Herstellungsverfahren ermöglicht insbesondere, vorlackierte Rohrhalter an Mastarmkörpern festzulegen, die ebenfalls vorlackiert sind.

Ein nach dem erfindungsgemäßen Verfahren hergestellter Betonverteilermast eignet sich insbesondere für den Einsatz in einer Autobetonpumpe.

Im Folgenden wird die Erfindung anhand eines in der Zeichnung in schematischer Weise dargestellten Ausführungsbeispiels näher erläutert.

Es zeigen:
- Fig. 1: eine Autobetonpumpe mit einem Betonverteilermast;
- Fig. 2: einen Mastarm des Betonverteilermasts mit einem Rohrhalter;
- Fig. 3: und Fig. 4 einen Schnitt des Mastarms entlang der Linie A-A aus Fig. 2 mit einem angeschlossenen bzw. gelösten Rohrhalter; und
- Fig. 5: ein Adapterstück mit einer Aufnahmeschnittstelle für den Rohrhalter.

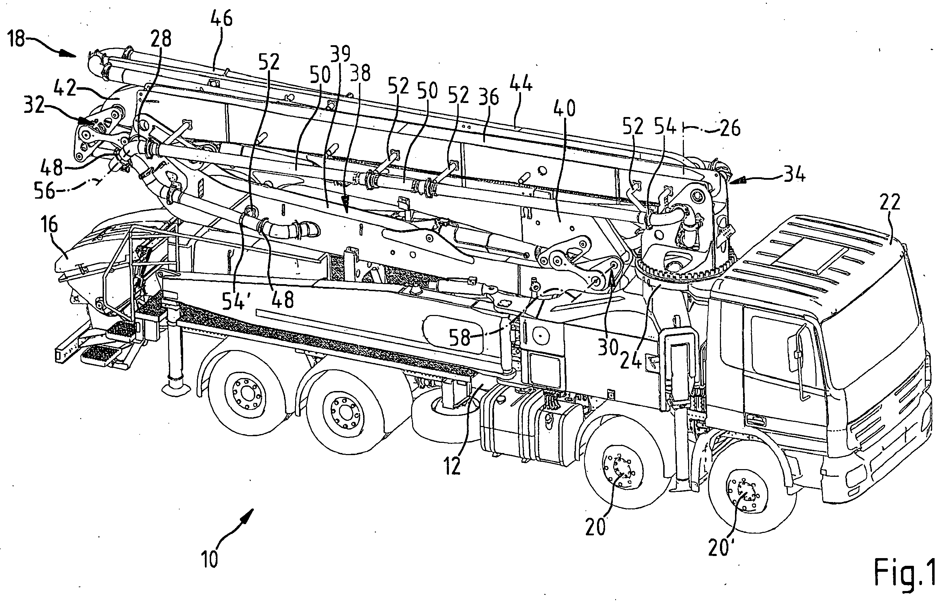

Die in Fig. 1 dargestellte Autobetonpumpe 10 hat ein vierachsiges Fahrgestell 12, das eine Zweizylinder-Dickstoffpumpe mit einem Materialaufgabebehälter 16 und einem Betonverteilermast 18 trägt. Der Betonverteilermast 18 ist im Bereich der Vorderachsen 20, 20' in der Nähe des Führerhauses 22 an einem Lagerbock 24 um eine vertikale Achse 26 drehbar gelagert. Der Betonverteilermast 18 ist aus fünf an den Knickgelenken 28, 30, 32, 34 mit Gelenkachsen, z.B. den Gelenkachsen 56, 58 gegeneinander verschwenkbaren Mastarmen 36, 38, 40, 42, 44 zusammengesetzt. Der Betonverteilermast 18 enthält eine Betonförderleitung 46, die mehrere, durch Rohrkupplungen 48 verbundene Rohrsegmente 50 aufweist. Die Betonförderleitung 46 ist an den Körpern der Mastarme 36, 38, 40, 42, 44, z.B. an Mastarmkörpern 39 mit Rohrhaltern 52 befestigt. Die Rohrhalter 52 tragen die Betonförderleitung 46 an einer Haltestelle 60 mit einem Rohrträgerabschnitt 54, 54', der ein Rohrsegment 50 der Förderleitung umgibt. In dem Betonverteilermast 18 kann ein solcher Rohrträgerabschnitt 54, 54' insbesondere als Kupplungsstück 62 oder als Rohrschelle gestaltet sein.

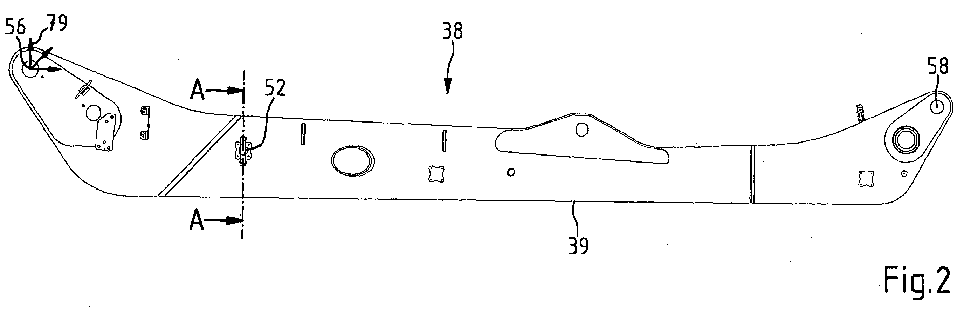

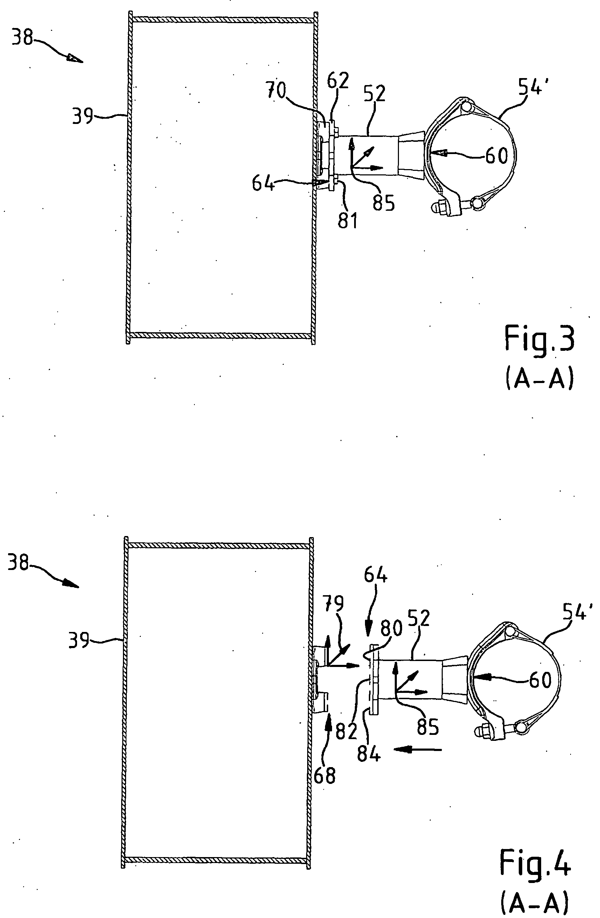

Die Fig. 2 und die Fig. 3 zeigen den Mastarm 38 in dem Betonverteilermast 18 mit einem Rohrträgerabschnitt 54' und der Haltestelle 60 für die Betonförderleitung 46. Der Mastarm 38 hat einen aus Stahlblechen aufgebauten Hohlprofilkörper 39. Der Rohrhalter 52 weist in einem Befestigungsabschnitt 62 eine Anschlussschnittstelle 64 auf. Mit der Anschlussschnittstelle 64 ist der Rohrhalter 52 an eine Aufnahmeschnittstelle 68 angeschlossen, die an dem Mastarm 38 ausgebildet ist. An der Anschlussschnittstelle 64 ist der Rohrhalter 52 mittels Befestigungsschrauben 81 in Bohrungen 83 festgelegt.

Die Fig. 4 zeigt den Rohrhalter 52 bei dem Vorgang des Anschließens an den Mastarmkörper 39. Die Anschlussschnittstelle 64 des Rohrhalters 52 hat drei Lagebezugspunkte 80, 82, 84, die eine Ebene definieren und damit ein kartesisches Koordinatensystem 85 festlegen, das in Bezug auf den Rohrhalter 52 ortsfest ist. Die Lage der Haltestelle 60 des Rohrhalters 52 ist durch die Position der Lagebezugspunkte 80, 82, 84 der Anschlussschnittstelle 64 vorgegeben. Die Aufnahmeschnittstelle 68 befindet sich an einem plattenförmig gestalteten Adapterstück 70, das an den Hohlprofilkörper 39 des Mastarms 38 angeschweißt ist.

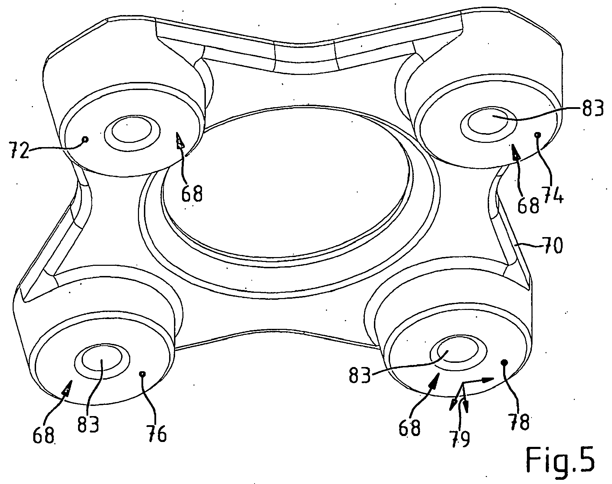

Die Fig. 5 zeigt das Adapterstück 70 mit der Aufnahmeschnittstelle 68 und Bohrungen 82. Die Aufnahmeschnittstelle 68 weist vier Lagebezugspunkte 72, 74, 76, 78 auf, die sich jeweils an einer Erhebung des Adapterstücks befinden. Auch die Lagebezugspunkte 72, 74, 76, 78 definieren eine Ebene und legen ein kartesisches Koordinatensystem 79 fest, das die Lage der Gelenkachsen 56, 58 eindeutig angibt. Die Position der Lagebezugspunkte 72, 74, 76, 78 in dem Mastarmkörper 39 ist von dessen Fertigungstoleranzen unabhängig und allein durch die Lage der Gelenkachsen 56, 58 vorgegeben.

Die Aufnahmeschnittstelle 68 mit den Bohrungen 83 an dem Mastarmkörper 39 wird nach dem Festlegen des Adapterstücks 70 auf einem Bearbeitungszentrum mittels spanender Materialbearbeitung so hergestellt, dass der Ort der Lagebezugspunkte 74, 76, 78 in Bezug auf die Gelenkachsen 56, 58 einem vorgegebenen Wert entspricht. Der Rohrhalter 52 wird bei der Herstellung auf einem Bearbeitungszentrum so vorgefertigt, dass die Haltestelle 60 für die Betonförderleitung 46 bei dem Anschluss des Rohrhalters 52 an die Aufnahmeschnittstelle 68 des Mastarms einem Knotenpunkt entspricht, der auf einer die Betonförderleitung 46 idealisierenden Linie angeordnet ist. Diese Maßnahme ermöglicht das Ausgleichen von Fertigungstoleranzen des Mastarms 38, ohne dass ein individuelles Anpassen eines Rohrhalters an den Betonverteilermast erforderlich ist.

Für das Ausgleichen von Fertigungstoleranzen sind der Befestigungsabschnitt 62 des Rohrhalters 52 und das Adapterstück 70 mit einer Materialreserve ausgebildet. Diese Materialreserve gewährleistet, dass das System aus Rohrhalter 52 und Mastarm 38 trotz der mit einer spanenden Nachbearbeitung verbundenen Materialschwächung den geforderten Festigkeitseigenschaften genügt.

Es sei bemerkt, dass der Rohrhalter 52 an dem Mastarm 38 nicht nur mittels Schrauben, sondern auch mit Bolzen, mit Nieten oder durch Kleben festgelegt werden kann. Für das Festlegen eines Rohrhalters an einem Mastarm eignet sich grundsätzlich jedes verzugsfreie Fügeverfahren. Wenn die Verbindung von Rohrhalter 52 und Mastarm 38 als lösbare Verbindung gestaltet wird, ist ein einfaches Austauschen entsprechender Rohrhalter 52 im Rahmen von Wartungsarbeiten ermöglicht.

Zusammenfassend sind insbesondere folgende Merkmale festzuhalten: Die Erfindung betrifft ein Verfahren zum Herstellen eines Mastarms 38 mit einem Mastarmkörper 39 und mit wenigstens einem Rohrhalter 52 für einen Betonverteilermast 18 zum Einsatz an stationären und mobilen Betonpumpen 10 mit mehreren an Knickgelenken 28, 30, 32, 34 um eine Gelenkachse 56, 58 schwenkbar miteinander verbundenen Mastarmen 36, 38, 40, 42, 44, die eine Betonförderleitung 46 halten, die wenigstens ein Drehgelenk hat, das eine mit einer Gelenkachse 56, 58 eines Knickgelenks 28, 30 fluchtende Drehachse aufweist. Der wenigstens eine Rohrhalter 52 hat dabei einen Rohrträgerabschnitt 54, 54', der für das Aufnehmen der Betonförderleitung 46 an einer Haltestelle 60 dient, die einen durch die Lage der Gelenkachse 56, 58 vorgegebenen Ort hat. Der Mastarmkörper 39 wird mit einer Aufnahmeschnittstelle 68 und der wenigstens eine Rohrhalter 52 mit einem Befestigungsabschnitt 62 vorgefertigt, der eine Anschlussschnittstelle 64 aufweist. Die Aufnahmeschnittstelle 68 wird mit wenigstens drei eine Ebene definierenden von Fertigungstoleranzen des Mastarmkörpers 39 unabhängigen durch die Position der Gelenkachse 56, 58 derart vorgegebenen Lagebezugspunkte 72, 73, 76, 78 hergestellt und die Anschlussschnittstelle 64 mit wenigstens drei eine Ebene definierenden und die Position des Rohrträgerabschnitts 54, 54' derart vorgebenden Lagebezugspunkten 80, 82, 84 ausgebildet, dass die Betonförderleitung 46 durch Anschließen des Rohrhalters 52 mit seiner Anschlussschnittstelle 62 an die Aufnahmeschnittstelle 68 des Mastarmkörpers 39 mit dem Rohrträgerabschnitt 54, 54' derart aufgenommen werden kann, dass sich die Haltestelle 60 an dem durch die Lage der Gelenkachse 56, 58 vorgegebenen Ort befindet.

### Bezugszeichenliste:

- 10: Autobetonpumpe
- 12: Fahrgestell
- 16: Materialaufgabebehälter
- 18: Betonverteilermast
- 20, 20': Vorderachse
- 22: Führerhaus
- 24: Lagerbock
- 26: Achse
- 28, 30, 32, 34: Knickgelenke
- 36, 38, 40, 42, 44: Mastarm
- 39: Mastarmkörper
- 46: Betonförderleitung
- 48: Rohrkupplung
- 50: Rohrsegment
- 52: Rohrhalter
- 54, 54': Rohrträgerabschnitt
- 56, 58: Gelenkachsen
- 60: Haltestelle
- 62: Befestigungsabschnitt
- 64: Anschlussschnittstelle
- 68: Aufnahmeschnittstelle
- 70: Adapterstück
- 72, 74, 76, 78: Lagebezugspunkte
- 79, 85: kartesisches Koordinatensystem
- 80, 82, 84: Lagebezugspunkte
- 81: Befestigungsschraube
- 83: Bohrung

## Patentansprüche

1. Verfahren zum Herstellen eines Mastarms (38) mit einem Mastarmkörper (39) und mit wenigstens einem Rohrhalter (52) für einen Betonverteilermast (18) zum Einsatz an stationären und mobilen Betonpumpen (10) mit mehreren an Knickgelenken (28, 30, 32, 34) um eine Gelenkachse (56, 58) schwenkbar miteinander verbundenen Mastarmen (36, 38, 40, 42, 44), die eine Betonförderleitung (46) halten, die wenigstens ein Drehgelenk hat, das eine mit einer Gelenkachse (56, 58) eines Knickgelenks (28, 30) fluchtende Drehachse aufweist, wobei der wenigstens eine Rohrhalter (52) einen Rohrträgerabschnitt (54, 54') hat, der für das Aufnehmen der Betonförderleitung (46) an einer Haltestelle (60) dient, die einen durch die Lage der Gelenkachse (56, 58) vorgegebenen Ort hat,
**dadurch gekennzeichnet, dass**
der Mastarmkörper (39) mit einer Aufnahmeschnittstelle (68) und der wenigstens eine Rohrhalter (52) mit einem Befestigungsabschnitt (62) vorgefertigt wird, der eine Anschlussschnittstelle (64) aufweist, wobei die Aufnahmeschnittstelle (68) mit wenigstens drei eine Ebene definierenden von Fertigungstoleranzen des Mastarmkörpers (39) unabhängigen durch die Position der Gelenkachse (56, 58) derart vorgegebenen Lagebezugspunkten (72, 74, 76, 78) hergestellt und die Anschlussschnittstelle (64) mit wenigstens drei eine Ebene definierenden und die Position des Rohrträgerabschnitts (54, 54') derart vorgebenden Lagebezugspunkten (80, 82, 84) ausgebildet wird, dass die Betonförderleitung (46) durch Anschließen des Rohrhalters (52) mit seiner Anschlussschnittstelle (64) an die Aufnahmeschnittstelle (68) des Mastarmkörpers (39) mit dem Rohrträgerabschnitt (54, 54') derart aufgenommen werden kann, dass sich die Haltestelle (60) an dem durch die Lage der Gelenkachse (56, 58) vorgegebenen Ort befindet.

2. Verfahren nach Anspruch 1, **dadurch gekennzeichnet, dass** der Mastarmkörper (39) wenigstens teilweise als ein Hohlprofilkörper ausgeführt wird, der einen Abschnitt mit einer um eine Materialreserve verstärkten Wandung hat und die Aufnahmeschnittstelle in der verstärkten Wandung des Mastarms ausgebildet wird.

3. Verfahren nach Anspruch 1, **dadurch gekennzeichnet, dass** die Anschlussschnittstelle (64) an einem Anschlussabschnitt eines vorzugsweise plattenförmig gestalteten Adapterstücks (70) ausgebildet wird, das an dem Mastarmkörper (39) festgelegt wird.

4. Verfahren nach Anspruch 3, **dadurch gekennzeichnet, dass** die Anschlussschnittstelle (64) an einer Erhebung des Adapterstücks (70) ausgebildet wird.

5. Verfahren nach Anspruch 3 oder 4, **dadurch gekennzeichnet, dass** das Adapterstück (70) für das Ausgleichen von Fertigungstoleranzen mit einer Materialreserve ausgebildet wird.

6. Verfahren nach einem der Ansprüche 1 bis 5, **dadurch gekennzeichnet, dass** der Befestigungsabschnitt (62) des Rohrhalters (52) als ein vorzugsweise plattenförmig gestaltetes Anschlussstück ausgebildet wird.

7. Verfahren nach Anspruch 6, **dadurch gekennzeichnet, dass** das Anschlussstück für das Ausgleichen von Fertigungstoleranzen mit einer Materialreserve ausgebildet wird.

8. Verfahren nach einem der Ansprüche 1 bis 7, **dadurch gekennzeichnet, dass** der Mastarmkörper (39) mit mehreren Aufnahmeschnittstellen (68) für das Anschließen eines Rohrhalters (52) ausgebildet wird, die jeweils wenigstens drei eine Ebene definierende von Fertigungstoleranzen des Mastarmkörpers (39) unabhängige und durch die Position der Gelenkachse (56, 58) vorgegebene Lagebezugspunkte (72, 74, 76, 78) aufweisen.

9. Verfahren nach einem der Ansprüche 1 bis 8, **dadurch gekennzeichnet, dass** die Aufnahmeschnittstelle (68) in einer vorzugsweise als Bearbeitungszentrum ausgebildeten Einrichtung für das Bearbeiten von Werkstücken mit einer auf die Position der Gelenkachsen (56, 58) bezogenen Bemaßung hergestellt wird.

10. Verfahren nach einem der Ansprüche 1 bis 9, **dadurch gekennzeichnet, dass** die Anschlussschnittstelle (64) in einer vorzugsweise als Bearbeitungszentrum ausgebildeten Einrichtung für das Bearbeiten von Werkstücken mit einer auf die Position der mit dem Rohrhalter (52) aufgenommenen Betonförderleitung (46) bezogenen Bemaßung hergestellt wird.

11. Verfahren nach einem der Ansprüche 1 bis 10, **dadurch gekennzeichnet, dass** der Rohrhalter (52) an dem Mastarmkörper (39) mit einem lösbaren Befestigungsmittel, insbesondere mit Schrauben (81) befestigt wird.

12. Verfahren nach einem der Ansprüche 1 bis 10, **dadurch gekennzeichnet, dass** der Rohrhalter (52) an dem Mastarmkörper (39) mit einem verzugsfreien Fügeverfahren, z.B. durch Herstellen einer Verbindung mit Bolzen oder mit Nieten oder mittels Kleben befestigt wird.

13. Betonverteilermast (18) zum Einsatz an stationären und mobilen Betonpumpen (10) mit mehreren an Knickgelenken (28, 30, 32, 34) um eine Gelenkachse (56, 58) schwenkbar miteinander verbundenen Mastarmen (36, 38, 40, 42, 44), die eine Betonförderleitung (46) halten, die wenigstens ein Drehgelenk hat, das eine mit einer Gelenkachse (56, 58) eines Knickgelenks (28, 30) fluchtende Drehachse aufweist, mit wenigstens einem Mastarm (38), der einen Mastarmkörper (39) und wenigstens einen Rohrhalter (52) aufweist, wobei der wenigstens eine Rohrhalter (52) einen Rohrträgerabschnitt (54, 54') hat, der für das Aufnehmen der Betonförderleitung (46) an einer Haltestelle (60) dient, die einen durch die Lage der Gelenkachse (56, 58) vorgegebenen Ort hat,
**dadurch gekennzeichnet, dass**
der Mastarmkörper (39) eine Aufnahmeschnittstelle (68) und der wenigstens eine Rohrhalter (52) einen Befestigungsabschnitt (62) hat, der eine Anschlussschnittstelle (64) aufweist, wobei die Aufnahmeschnittstelle (68) wenigstens drei eine Ebene definierende von Fertigungstoleranzen des Mastarmkörpers (39) unabhängige durch die Position der Gelenkachse (56, 58) derart vorgegebene Lagebezugspunkte (72, 74, 76, 78) und die Anschlussschnittstelle (64) wenigsten drei eine Ebene definierende und die Position des Rohrträgerabschnitts (54, 54') derart vorgebende Lagebezugspunkte (80, 82, 84) aufweist, dass die Betonförderleitung (46) durch Anschließen des Rohrhalters (52) mit seiner Anschlussschnittstelle (64) an die Aufnahmeschnittstelle (68) des Mastarmkörpers (39) mit dem Rohrträgerabschnitt (54, 54') derart aufgenommen werden kann, dass sich die Haltestelle (60) an dem durch die Lage der Gelenkachse (56, 58) vorgegebenen Ort befindet.

14. Autobetonpumpe (10) mit einem nach Anspruch 13 ausgebildeten Betonverteilermast (18).

## Claims

1. A method for producing a boom arm (38) having a boom-arm body (39) and having at least one pipe holder (52) for a concrete-distributing boom (18) for use on stationary and mobile concrete pumps (10) having a plurality of boom arms (36, 38, 40, 42, 44) which are connected to one another such that they can be pivoted about an axis of articulation (56, 58) at folding articulations (28, 30, 32, 34) and retain a concrete-delivery line (46), which has at least one rotary articulation having an axis of rotation aligned with an axis of articulation (56, 58) of a folding articulation (28, 30), wherein the at least one pipe holder (52) has a pipe-carrier portion (54, 54'), which serves for accommodating the concrete-delivery line (46) at a retaining location (60), of which the siting is predetermined by the position of the axis of articulation (56, 58),
**characterized in that**
the boom-arm body (39) is prefabricated with an accommodating interface (68) and the at least one pipe holder (52) is prefabricated with a fastening portion (62), which has a connection interface (64), wherein the accommodating interface (68) is produced with at least three plane-defining positional reference points (72, 74, 76, 78), which are independent of production tolerances of the boom-arm body (39) and are predetermined by the position of the axis of articulation (56, 58) such that, and the connection interface (64) is designed with at least three plane-defining positional reference points (80, 82, 84), which predetermine the position of the pipe-carrier portion (54, 54') such that, the concrete-delivery line (46), by virtue of the pipe holder (52) having its connection interface (64) connected to the accommodating interface (68) of the boom-arm body (39), can be accommodated by the pipe-carrier portion (54, 54') such that the retaining location (60) has its siting predetermined by the position of the axis of articulation (56, 58).

2. The method as claimed in claim 1, **characterized in that** the boom-arm body (39) is configured, at least in part, in the form of a hollow-profile body which has a portion with a wall reinforced by a material reserve, and the accommodating interface is formed in the reinforced wall of the boom arm.

3. The method as claimed in claim 1, **characterized in that** the connection interface (64) is formed on a connection portion of a preferably plate-like adapter piece (70), which is secured on the boom-arm body (39).

4. The method as claimed in claim 3, **characterized in that** the connection interface (64) is formed on an elevation of the adapter piece (70).

5. The method as claimed in claim 3 or 4, **characterized in that** the adapter piece (70) is formed with a material reserve in order to compensate for production tolerances.

6. The method as claimed in one of claims 1 to 5, **characterized in that** the fastening portion (62) of the pipe holder (52) is designed in the form of a preferably plate-like connection piece.

7. The method as claimed in claim 6, **characterized in that** the connection piece is formed with a material reserve in order to compensate for production tolerances.

8. The method as claimed in one of claims 1 to 7, **characterized in that** the boom-arm body (39) is designed with a plurality of accommodating interfaces (68) for the connection of a pipe holder (52), each of these accommodating interfaces having at least three plane-defining positional reference points (72, 74, 76, 78), which are independent of production tolerances of the boom-arm body (39) and are predetermined by the position of the axis of articulation (56, 58).

9. The method as claimed in one of claims 1 to 8, **characterized in that** the accommodating interface (68) is produced in a device which is designed preferably in the form of a machining center and is intended for machining workpieces with dimensioning related to the position of the axes of articulation (56, 58).

10. The method as claimed in one of claims 1 to 9, **characterized in that** the connection interface (64) is produced in a device which is designed preferably in the form of a machining center and is intended for machining workpieces with dimensioning related to the position of the concrete-delivery line (46) accommodated by the pipe holder (52).

11. The method as claimed in one of claims 1 to 10, **characterized in that** the pipe holder (52) is fastened on the boom-arm body (39) using a releasable fastening means, in particular using screws (81).

12. The method as claimed in one of claims 1 to 10, **characterized in that** the pipe holder (52) is fastened on the boom-arm body (39) using a distortion-free joining method, e.g. by establishing a connection using bolts or using rivets or by means of adhesive bonding.

13. A concrete-distributing boom (18) for use on stationary and mobile concrete pumps (10) having a plurality of boom arms (36, 38, 40, 42, 44) which are connected to one another such that they can be pivoted about an axis of articulation (56, 58) at folding articulations (28, 30, 32, 34) and retain a concrete-delivery line (46), which has at least one rotary articulation having an axis of rotation aligned with an axis of articulation (56, 58) of a folding articulation (28, 30), having at least one boom arm (38) which has a boom-arm body (39) and at least one pipe holder (52), wherein the at least one pipe holder (52) has a pipe-carrier portion (54, 54'), which serves for accommodating the concrete-delivery line (46) at a retaining location (60), of which the siting is predetermined by the position of the axis of articulation (56, 58),
**characterized in that**
the boom-arm body (39) has an accommodating interface (68) and the at least one pipe holder (52) has a fastening portion (62), which has a connection interface (64), wherein the accommodating interface (68) has at least three plane-defining positional reference points (72, 74, 76, 78), which are independent of production tolerances of the boom-arm body (39) and are predetermined by the position of the axis of articulation (56, 58) such that, and the connection interface (64) has at least three plane-defining positional reference points (80, 82, 84), which predetermine the position of the pipe-carrier portion (54, 54') such that, the concrete-delivery line (46), by virtue of the pipe holder (52) having its connection interface (64) connected to the accommodating interface (68) of the boom-arm body (39), can be accommodated by the pipe-carrier portion (54, 54') such that the retaining location (60) has its siting predetermined by the position of the axis of articulation (56, 58).

14. A truck-mounted concrete pump (10) having a concrete-distributing boom (18) designed as claimed in claim 13.

## Revendications

1. Procédé de fabrication d'un bras de mât (38) comprenant un corps de bras de mât (39) et au moins un support de tube (52), pour un mât distributeur de béton (18) destiné à être utilisé sur des pompes à béton (10) stationnaires ou mobiles comprenant plusieurs bras de mât (36, 38, 40, 42, 44) qui sont reliés les uns aux autres de manière à pouvoir pivoter autour d'un axe d'articulation (56, 58) au niveau de joints articulés (28, 30, 32, 34) et qui supportent une conduite d'alimentation en béton (46) qui possède au moins un joint rotatif qui présente un axe de rotation aligné avec un axe d'articulation (56, 58) d'un joint articulé (28, 30), sachant que le support de tube (52) au moins unique possède une partie porteuse de tube (54, 54') qui sert à recevoir la conduite d'alimentation en béton (46) en un point de retenue (60) qui se trouve en un emplacement prédéterminé par la position de l'axe d'articulation (56, 58),
**caractérisé en ce que** le corps de bras de mât (39) est préfabriqué avec une interface de réception (68) et le support de tube (52) au moins unique avec une partie de fixation (62) qui présente une interface de raccordement (64), sachant que l'interface de réception (68) est produite par au moins trois points de référence de position (72, 74, 76, 78) définissant un plan, indépendants des tolérances de fabrication du corps de bras de mât (39) et prédéterminés par la position de l'axe d'articulation (56, 58) de telle sorte, et l'interface de raccordement (64) est réalisée par au moins trois points de référence de position (80, 82, 84) définissant un plan et prédéterminant la position de la partie porteuse de tube (54, 54') de telle sorte, que la conduite d'alimentation en béton (46) peut être reçue par la partie porteuse de tube (54, 54'), par le raccordement du support de tube (52) par son interface de raccordement (64) à l'interface de réception (68) du corps de bras de mât (39), de telle sorte que le point de retenue (60) se trouve à l'emplacement prédéterminé par la position de l'axe d'articulation (56, 58).

2. Procédé selon la revendication 1, **caractérisé en ce que** le corps de bras de mât (39) est réalisé au moins partiellement sous la forme d'un corps profilé creux qui possède une partie ayant une paroi renforcée d'une réserve de matériau, et l'interface de réception est formée dans la paroi renforcée du bras de mât.

3. Procédé selon la revendication 1, **caractérisé en ce que** l'interface de raccordement (64) est formée sur une partie de raccordement d'une pièce adaptatrice (70), réalisée de préférence en forme de plaque, qui est fixée sur le corps de bras de mât (39).

4. Procédé selon la revendication 3, **caractérisé en ce que** l'interface de raccordement (64) est formée sur un bossage de la pièce adaptatrice (70).

5. Procédé selon la revendication 3 ou 4, **caractérisé en ce que** la pièce adaptatrice (70) est réalisée avec une réserve de matériau afin de compenser les tolérances de fabrication.

6. Procédé selon l'une des revendications 1 à 5, **caractérisé en ce que** la partie de fixation (62) du support de tube (52) est réalisée sous la forme d'une pièce de raccordement, configurée de préférence en forme de plaque.

7. Procédé selon la revendication 6, **caractérisé en ce que** la pièce de raccordement est réalisée avec une réserve de matériau afin de compenser les tolérances de fabrication.

8. Procédé selon l'une des revendications 1 à 7, **caractérisé en ce que** le corps de bras de mât (39) est réalisé avec plusieurs interfaces de réception (68) pour le raccordement d'un support de tube (52), qui présentent respectivement au moins trois points de référence de position (72, 74, 76, 78) définissant un plan, indépendants des tolérances de fabrication du corps de bras de mât (39) et prédéterminés par la position de l'axe d'articulation (56, 58).

9. Procédé selon l'une des revendications 1 à 8, **caractérisé en ce que** l'interface de réception (68) est fabriquée dans un dispositif d'usinage de pièces réalisé de préférence sous forme de centre d'usinage, avec un dimensionnement fonction de la position des axes d'articulation (56, 58).

10. Procédé selon l'une des revendications 1 à 9, **caractérisé en ce que** l'interface de raccordement (64) est fabriquée dans un dispositif d'usinage de pièces réalisé de préférence sous forme de centre d'usinage, avec un dimensionnement fonction de la position de la conduite d'alimentation en béton (46) reçue par le support de tube (52).

11. Procédé selon l'une des revendications 1 à 10, **caractérisé en ce que** le support de tube (52) est fixé sur le corps de bras de mât (39) par un moyen de fixation amovible, en particulier par des vis (81).

12. Procédé selon l'une des revendications 1 à 10, **caractérisé en ce que** le support de tube (52) est fixé sur le corps de bras de mât (39) par une méthode d'assemblage sans déformation, par exemple par la réalisation d'un assemblage avec des boulons ou avec des rivets, ou par collage.

13. Mât distributeur de béton (18) destiné à être utilisé sur des pompes à béton (10) stationnaires et mobiles, comprenant plusieurs bras de mât (36, 38, 40, 42, 44) qui sont reliés les uns aux autres de manière à pouvoir pivoter autour d'un axe d'articulation (56, 58) au niveau de joints articulés (28, 30, 32, 34) et qui supportent une conduite d'alimentation en béton (46) qui possède au moins un joint rotatif qui présente un axe de rotation aligné avec un axe d'articulation (56, 58) d'un joint articulé (28, 30), avec au moins un bras de mat (38) qui présente un corps de bras de mât (39) et au moins un support de tube (52), sachant que le support de tube (52) au moins unique possède une partie porteuse de tube (54, 54') qui sert à recevoir la conduite d'alimentation en béton (46) en un point de retenue (60) qui se trouve en un emplacement prédéterminé par la position de l'axe d'articulation (56, 58),
**caractérisé en ce que** le corps de bras de mât (39) possède une interface de réception (68) et le support de tube (52) au moins unique une partie de fixation (62) qui présente une interface de raccordement (64), sachant que l'interface de réception (68) présente au moins trois points de référence de position (72, 74, 76, 78) définissant un plan, indépendants des tolérances de fabrication du corps de bras de mât (39) et prédéterminés par la position de l'axe d'articulation (56, 58) de telle sorte, et l'interface de raccordement (64) présente au moins trois points de référence de position (80, 82, 84) définissant un plan et prédéterminant la position de la partie porteuse de tube (54, 54') de telle sorte, que la conduite d'alimentation en béton (46) peut être reçue par la partie porteuse de tube (54, 54'), par le raccordement du support de tube (52) par son interface de raccordement (64) à l'interface de réception (68) du corps de bras de mât (39), de telle sorte que le point de retenue (60) se trouve à l'emplacement prédéterminé par la position de l'axe d'articulation (56, 58).

14. Pompe à béton (10) sur camion avec un mât distributeur de béton (18) configuré selon la revendication 13.
